(19) Europäisches Patentamt
European Patent Office
Office européen des brevets

(11) **EP 1 405 517 B1**

(12) **EUROPEAN PATENT SPECIFICATION**

(45) Date of publication and mention
of the grant of the patent:
**02.01.2013   Bulletin 2013/01**

(51) Int Cl.:
***H04N 7/16*** *(2011.01)*

(21) Application number: **01274300.1**

(22) Date of filing: **12.11.2001**

(86) International application number:
**PCT/IL2001/001048**

(87) International publication number:
**WO 2002/100150 (19.12.2002 Gazette 2002/51)**

(54) **ANONYMOUS ORDERING SYSTEM**

ANONYMES BESTELLUNGSSYSTEM

SYSTEME DE COMMANDE ANONYME

(84) Designated Contracting States:
**AT BE CH CY DE DK ES FI FR GB GR IE IT LI LU
MC NL PT SE TR**

(30) Priority: **11.06.2001   US 297619 P**

(43) Date of publication of application:
**07.04.2004   Bulletin 2004/15**

(73) Proprietor: **NDS Limited
Staines, Middlesex TW18 4EX (GB)**

(72) Inventor: **TSURIA, Yossi
93390 Jerusalem (IL)**

(74) Representative: **White, Duncan Rohan
Marks & Clerk LLP
90 Long Acre
London
WC2E 9RA (GB)**

(56) References cited:
**WO-A-00/23910          WO-A-00/57636
US-A- 5 754 939          US-A- 6 014 646**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to pay television and related pay-for-electronic-item technologies generally, especially to pay-per-view systems.

BACKGROUND OF THE INVENTION

It is known in the prior art of pay television systems to be able to order pay-per-view items via a television system. Generally, a broadcaster or other content provider is informed of the items that are ordered, whether the items are pre-ordered or ordered on impulse for immediate viewing. In impulse pay-per-view systems, which allow ordering of an item without a real-time connection to the broadcaster, the broadcaster is later notified using, for example, a call-back mechanism as is well known in the art.

Similarly, in the prior art, a subscriber to pay television may order a particular pay television service allowing the subscriber to view a plurality of items falling in a predefined category.

Systems for scrambling a television data stream are well-known in the art. One such system is described in the following US Patents: 5,282,249 to Cohen et al.; 5,481,609 to Cohen et al. Scrambled television data streams described in the Cohen et al patents comprise both scrambled data representing television signals and coded control messages, also known as ECMs. The ECMs of Cohen et al comprise, in a coded form, data necessary for generating a control word (CW) which may be used to descramble the scrambled data representing television signals. An ECM is also termed a control word packet or CWP.

While the two patents to Cohen et al describe an analog system, that is, a system in which analog television data streams are broadcast to television sets, it is appreciated that similar ECM methods may also be used for digital television data streams. Generally, the scrambling techniques used for scrambling analog television signals such as, for example, the well-known "cut-and-rotate" technique, are chosen for their applicability to analog signals. In scrambling of digital television signals other scrambling techniques, well-known in the art, are used, the techniques being more appropriate to digital signals such as, for example, applying the well-known DES algorithm to the digital television signals.

References describing systems related to privacy in transmission of content include the following:

An internet article entitled "Prepaid Smart Card Techniques - A Brief Introduction and Comparison, by D. Chaum at http://www.chaum.com/articles/Prepaid_Smart_Cad_Techniques.htm describes a method in which a system provider receives money in advance from users and stores the corresponding value onto the users' smart cards. After accepting stored value from the smart cards of users, retailers are periodically reimbursed with actual money by system providers. An internet article entitled "Security without Identification -Card Computers to make Big Brother Obsolete," by D. Chaum at http://www.chaum.com/articles/Security_Without_Identification.htm describes a method in which a personal "card computer" is used to handle consumer payments and transactions in a way which safeguards security and privacy.
An internet article entitled "On Electronic Commerce - How Much do You Trust Big Brother?" by D. Chaum at http://computer.org/Internet/v1n6/w6chaum.htm describes a method for preventing invasion of privacy.

U.S. Patents 4,325,078 to Seaton et al describes a use of disposal magnetic cards for viewing a single broadcast.

US Patent 6,169,975 to White et al describes a method for issuance of smart cards by a vending machine.

US Patent 5,915,226 to Martineau describes a method of anonymous use of a prepaid smart card.

US Patent 5,913,203 to Wong et al describes methods for guarding the privacy of Web payments through a third party.

US Patents 4,987,593 and 4,914,698 to Chaum describe a technique for issuing and showing blind digital signatures.

US Patent 5,003,348 to Howitt describes impulse pay per view systems.

PCT Patent Application WO 99/66714 to Peterka describes a system that allows service providers, consumer electronics manufacturers or standards bodies to define flexible security policies for the execution of downloaded applications on digital television receivers.

US Patent 5,731,576 to Valadier describes a method of transaction that replenishes a microprocessor-based card.

US Patent 5,590,193 to Le Roux describes a method for securing access to detachable cards of the mass storage or I/O type using a password to encipher the address of the configuration register placed in the descriptor of the card, which descriptor is stored in a non-volatile memory of the card.

US Patent 5,264,689 to Maes et al describes memory cards, which contain rechargeable memory, and are used as a means of prepayment in installations for the dispensing of products and services.

US Patent 5,768,385 to Simon describes an untraceable electronic cash protocol one-way function $f_1(x)$ to generate an image $f_1(x_1)$ from a preimage $x_1$; sending the image $f_1(x_1)$ in an unblinded form to a second party; and receiving from the second party a note including a digital signature, wherein the note represents a commitment by the second party to credit a predetermined amount of money to a first presenter of the preimage x.sub.1 to the second party.

US Patent 4,484,217 to Block et al which describes a method and system for providing subscription services, particularly subscription television services, involving transmissions from a remote location to a subscriber location for which payment is required for access.

US Patent 6,126,069 to Stiefel et al describes anonymous use of and payment for, as well as collection of statistics, fee-based services, in particular Near-VOD services, employing a single chip card that can be used for all service providers.

US Patent 6,009,465 to Decker et al describes a remote video delivery system, which transmits video and text from a hotel office to hotel rooms.

US Patent 3,890,461 to Vogelman et al describes a subscription television receiver for receiving a scrambled television signal, which includes a card or ticket reader into which a ticket having a unique coding pattern is placed.

US Patent 5,070,400 to Lieberman describes a technique in which a pay television subscriber pays for viewing credits which are transmitted to the subscriber equipment from a central office, and each program is associated with a pulse having a rate corresponding to the charge per unit time for that program, and the viewing credits are debited appropriately.

US Patent 4,682,224 to Ragan et al describes a system for providing intelligible video program signals and corresponding video synchronization signals to authorized video displays only comprising transmitting means for transmitting scrambled signals of at least one video program; a receiver for receiving said scrambled video program signals for said at least one video program; and a descrambling unit coupled to said receiver and including an electronic ticket removably coupled to the input of said video receiver for intercepting and descrambling the at least one scrambled video program signal from said receiver and recovering the synchronizing signals, and means coupling the recovered synchronization sweep signals and the unscrambled intelligible video program signals to said video display.

D. Husemann. April-June 1999. The Smart Card: Don't Leave Home Without It. IEEE Concurrency, pp. 24-27.

S. Dokko, J. Jeon, Y. Kim. An Implementation of Prepaid Service in CDMA PCS System. 5 pages. 1998, Proceedings of the IEEE International Conference on Networks.

J. Dhem, D. Veithen, J. Quisquater. June 1996. SCALPS: Smart Card for Limited Payment Systems. IEEEMicro, pp. 42-50.

M. Milenkovic. October-December 1998. Delivering Interactive Services via a Digital TV Infrastructure. IEEE Multimedia, pp. 34-43.

An internet article entitled "The Disappearance of Telecommunications: Beyond the Physical" at

http://www.ieee.org/organizations/pubs/press/authors/saracco/cap4_a pp.htm.

An internet article entitled "Breaking Up is Hard to Do: Modeling Security Threats for Smart Cards" at http://www.usenix.net/publications/library/proceedings/smartcard99/f ull_papers/schneier/schneier_html/index.htm.

An internet article entitled "Breaking Up is Hard to Do: Modeling Security Threats for Smart Cards" at http://www.usenix.net/event/smartcard99/full_papers/schneier/schneie r_html/index.html.

An internet article entitled " Diffuse Guide To Electronic Payment" at http://www.diffuse.org/payguide.html.

An internet article entitled "The Regulation of Conditional Access for Digital Television Services - Oftel Guidelines" at http://www.oftel.gov.uk/broadcast/conacc.htm.

An internet article entitled "Interactivity in 2000: An Industry Viewpoint" at http://jiad.org/voll/nol/katz/index.html.

An internet article entitled "Case Study - Putting Interactivity in Prime Time" at http://www.cardtechnology.com/jun00.htm.

An internet article entitled " Online Shopper - Undercover Buying, Fake Names and All" at http://www.nytimes.com/2000/09/14/technology/14SHOP.html.

An internet article entitled "Web Sites that Help Keep You Private" at http://www.nytimes.com/library/tech/00/06/biztech/technology/07priv.html.

An internet article entitled "Broadcast Conditional Access" at http://www.cedmagazine.com/ced/9803/9803cc.htm.

An internet article entitled "Subscription TV - It's Your Dime" at http://www.digitaltelevisiion.com/tvtoday/philipos/12.htm.

It is know in the art to use prior art systems of the type described above for pay-per-view ordering.

The disclosures of all references mentioned above and throughout the present specification are hereby incorporated herein by reference.

SUMMARY OF THE INVENTION

The present invention seeks to provide an improved system for pay-per-view and pay-per-electronic-item ordering.

The prior art does not provide a convenient way for pay-per-view ordering or ordering a subscription "anonymously", in which the broadcaster or content provider knows how many orders have been placed and controls ordering, but the broadcaster or content provider does not know who has ordered each item. Anonymous ordering of this type is believed to be particularly relevant when the content being ordered might be considered embarrassing to the consumer; for example, if "blue" movies are being ordered.

In certain preferred embodiments, the present invention is particularly suited to systems, such as that described above in US Patents 5,282,249 to Cohen et al. and 5,481,609 to Cohen et al., in which a removable security element, such as a smart card, is used to store entitlement data defining items or services to which a user of the system is entitled. For sake of simplicity of description, such a removable security element will be referred to in the present application as a "smart card", it being appreciated that any other appropriate form of removable security element may alternatively be used.

In a preferred embodiment of the present invention, the user removes a smart card from a set top box (STB) associated with the user's home television or entertainment system. The smart card may be the main smart card used with the STB, or may be a second or auxiliary smart card; systems using a second or auxiliary smart card are described, for example, in the following US Patents:

US Patent 5,666,412;
US Patent 5,774,546 ; and
US Patent 5,878,134.

It is appreciated that the present invention is not limited to a home environment, but may be also be used in any other appropriate environment ; without limiting the generality of the foregoing and for the sake of simplicity of description, a home environment is generally described in the present specification.

The user then preferably takes the smart card to an ordering location, such as a manned or unmanned kiosk.

It is appreciated that, in an alternative preferred embodiment of the present invention, the smart card may be provided at the kiosk rather than having been previously removed from the user's home or from another user location.

At the kiosk, an authorization for the desired item is preferably provided to the smart card. Communication is preferably maintained with the broadcaster or other content provider in order to ensure that the broadcaster or other content provider knows how many consumers have ordered the item, and preferably to prevent certain kinds of cheating, such as sharing a single authorization among a plurality of users.

The user then preferably returns home with the smart card having the authorization and re-inserts the smart card in the STB.

The user is thus enabled to order a pay-per-view item anonymously, and to utilize the anonymously ordered item.

WO-A-00/57636 discloses a pay-per-item system, a method of anonymously ordering an item, the method comprising, providing a removable security element; and ordering the item through an interface device by, placing the removable security element in removable operative association with the interface device; and the removable security element receiving an authorization for utilizing the item from the interface device.

The invention is characterised in accordance with claims 1 and 11.

The removable security element may comprise a smart card.

The ordering may also comprise, removing the removable security element from removable operative association with the interface device.

The method may also comprise, before the ordering, removing the removable security element from removable operative association with a set top box (STB).

The method may also comprise, after the ordering, placing the removable security element in removable operative association with the STB.

The method may also comprise, utilizing the item with the STB.

The authorization request may comprise a disguising number, and the authorization comprises an authorization disguised with the disguising number.

The method may also comprise, the interface device sends the disguising number to the headend; and the authorization received by the interface device from the headend is disguised with the disguising number.

The pay-per-item system may comprise a pay television system.

The item may comprise a pay-per-view item.

The item may comprise a subscription.

The invention also provides an interface device comprising a removable security element communicator for communicating with a removable security element; and an authorization provider for providing an authorization for an item to the removable security element via the removable security element communicator, the authorization provider comprising communication apparatus for communicating with a headend, characterized in that the authorization provider sends an intermediary authorization request to the headend via the communication apparatus and receives the authorization from the headend via the communication apparatus.

The removable security element communicator may receive a disguising number from the removable security element and sends the disguising number to the authorization provider, and the intermediary authorization request comprises the disguising number, and the authorization comprises a disguised authorization disguised with the disguising number.

The removable security element may comprise a smart card.

The item may be utilizable as part of a pay-per-item system.

The pay-per-item system may comprise a pay television system.

The item may comprise a pay-per-view item.
The item may comprise a subscription.

BRIEF DESCRIPTION OF THE DRAWINGS

The present invention will be understood and appreciated more fully from the following detailed description, taken in conjunction with the drawings in which:

Fig.1 is a simplified partly pictorial, partly block diagram illustration of a pay-for-electronic-item ordering system constructed and operative in accordance with a preferred embodiment of the present invention ;
Fig. 2 is a simplified block diagram illustration of a preferred implementation of a portion of the apparatus of Fig. 1; and
Fig. 3 is a simplified flowchart illustration of a preferred method of operation of the system of Fig. 1.

DETAILED DESCRIPTION OF A PREFERRED EMBODIMENT

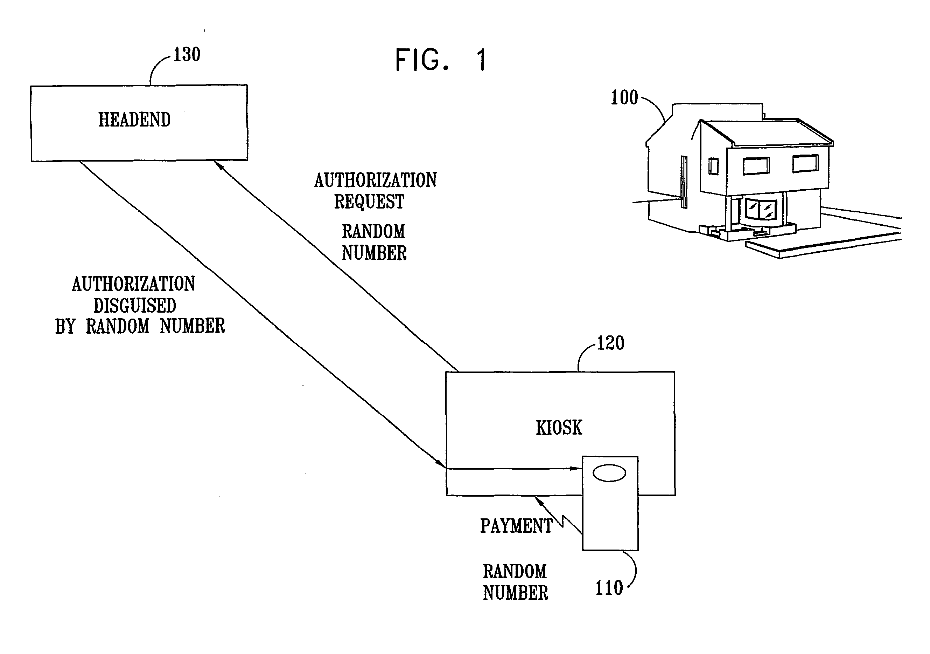

Reference is now made to Fig.1, which is a simplified partly pictorial, partly block diagram illustration of a pay-for-electronic-item ordering system constructed and operative in accordance with a preferred embodiment of the present invention. In the system of Fig.1, which, as described above, is particularly useful for ordering items for use with a home-based pay television or other pay entertainment system, a user (not shown) has removed, from the user's home location 100, a removable security element such as a smart card 110. For the sake of simplicity of description and without limiting the generality of the present invention, the example of the smart card 110 will generally be described in the present specification.
Typically, as described above, the smart card 110 will have been removed from an STB (not shown), as described above. It is appreciated, as described above, that the present invention is not limited to a home environment, but may be also be used in any other appropriate environment. It is further appreciated that, in an alternative preferred embodiment of the present invention, the smart card may be provided at a kiosk (see below), rather than having been previously removed from the user's home or from another user location.
As described above and as is well-known in the art, the smart card 110 preferably stores authorization information authorizing access to items to which the user is entitled.
The system of Fig. 1 comprises a kiosk 120 or other automated or semi-automated interface device, preferably comprising an appropriate smart card reader (not shown in Fig. 1) adapted to receive the smart card 110. The kiosk 120 also preferably comprises appropriate communication apparatus (not shown in Fig. 1), such as communication apparatus well known in the art, for communicating with a broadcaster-controlled or content-provider-controlled center such as a headend 130. It is appreciated that communications between the kiosk 120 and the headend 130 may be via any suitable communications channel or channels, and may or may not be secured or otherwise protected from eavesdropping and alteration, using methods well known in the art.
The operation of the system of Fig. 1 is now briefly described.
In order to purchase authorization for a particular item, the user (not shown) indicates a choice of item to the kiosk 120. The user's smart card 110 provides to the kiosk 120, typically when queried by the kiosk 120 or upon the user's indication of a choice of item:

1. payment for the item, typically comprising any appropriate payment authorization; by way of example only, such payment authorization may include debit card or credit card payment authorization; and
2. a random or pseudo-random number generated by the smart card 110 and then stored in a memory (not shown) thereof.

The kiosk 120, typically after confirming authenticity of the payment authorization, sends an authorization request and the random number to the headend 130. The kiosk 120 may also send its own payment authorization to the headend 130, or payment may be arranged by any other appropriate method.
The headend 130, if it determines that it wishes to grant the requested authorization, transmits to the kiosk 120 an authorization disguised in some appropriate reversible way by the random number. For example, and without limiting the generality of the foregoing, if the authorization comprises a number, the disguised authorization may comprise the authorization XOR the random number, where "XOR" represents an exclusive-OR operation. It is appreciated that, for a known random number r, an XOR operation using r is reversible, since:

$$(a \text{ XOR } r) \text{ XOR } r = a$$

The kiosk 120 preferably passes the disguised authorization on to the smart card 110. The smart card 110, which has stored the random number as previously described, reverses the disguising operation to obtain the authorization.
It is appreciated that, in a case where the smart card 110 comprises a secure device which has not been tampered with, and other similar smart cards (not shown) also comprise secure devices which have not been tampered with, disguising the authorization sent from the headend 130 prevents the authorization from being used by another smart card, other than the smart card 110, which has not paid for the authorization and does not have access to the random number.

Preferably, the user then returns home with the smart card 110 having the authorization and re-inserts the smart card 110 in the STB (not shown).

The user is thus enabled to order a pay-per-view item anonymously, and to utilize the ordered item.

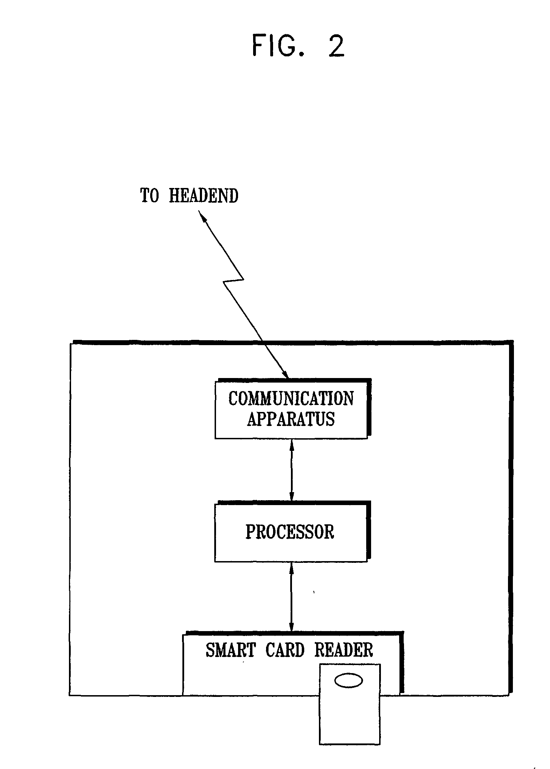

Reference is now made to Fig. 2, which is a simplified block diagram illustration of a preferred implementation of the kiosk 120 of Fig. 1. The apparatus of Fig. 2 is self-explanatory.

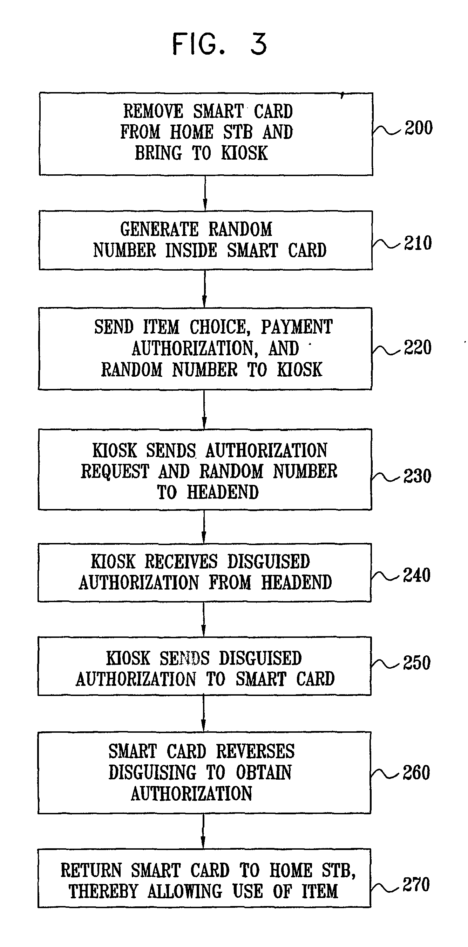

Reference is now made to Fig. 3, which is a simplified flowchart illustration of a preferred method of operation of the system of Fig. 1. The method of Fig. 3, comprising steps 200 - 270, is self-explanatory in light of the above discussion, except as described below.

It is appreciated that other alternative preferred methods of operation of the system of Fig. 1 may include various appropriate portions of the method of Fig. 3, such as, for example:

a) a method comprising steps 210 - 260 of Fig. 3, and not comprising the other steps of Fig. 3;
b) a method similar to the method of Fig. 3, but without the use of disguising using a random number; and

any appropriate combination of a and b.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather, the scope of the present invention is defined only by the claims which follow:

**Claims**

1. A method of operating an interface device for anonymously ordering an item, the method comprising:

receiving a removable security element (110) in removable operative association with the interface device (120); and
providing to the removable security element (110) an authorization for utilizing the item from the interface device (120),
**characterized in that** the interface device supplies the removable security element (110) with the authorization by:
receiving an authorization request from the removable security element (110) at the interface device (120);
the interface device (120) sending an intermediary authorization request to a headend (130); the interface device (120) receiving the authorization from the headend(130); and
the interface device (120) sending the authorization to the removable security element (110); the method further comprising removing the removable security element (110) from removable operative association with the interface device (120) for subsequent use at another user location.

2. The method according to claim 1 and wherein the removable security element (110) comprises a smart card.

3. The method according to any of claims 1 or 2 and also comprising:

before the ordering, removing the removable security element (110) from removable operative association with a set top box (STB).

4. The method according to claim 1, 2 or 3, and also comprising:

after the ordering, placing the removable security element (110) in removable operative association with the STB.

5. The method according to claim 4 and also comprising:

utilizing the item with the STB.

6. The method according to any of claims 1 - 5 and wherein the authorization request comprises a disguising number, and
the authorization comprises an authorization disguised with the disguising number.

7. The method according to claim 6 and also comprising:

the interface device (120) sends the disguising number to the headend (130); and
the authorization received by the interface device (120) from the headend (130) is disguised with the disguising number.

8. The method according to any of claims 1 - 7 and wherein the pay-per-item system comprises a pay television system.

9. The method according to claim 8 and wherein the item comprises a pay-per-view item.

10. The method according to claim 8 and wherein the item comprises a subscription.

11. An interface device (120) comprising:

a removable security element communicator for communicating with a removable security element (110); and
an authorization provider for providing an authorization for an item to the removable security element (110) via the removable security element communicator, the authorisation provider comprising communication apparatus for communicating with a headend (130),

**characterized in that** the interface is arranged to supply the authorisation to the removable security element by:

receiving an authorisation request from a removable security element;
the authorization provider sending an intermediary authorization request to the headend (130) via the communication apparatus;
receiving the authorization from the headend (130) via the communication apparatus; and
sending the authorization to a removable security element (110);

whereby a removable security element (110) is removable from operative association with the interface device (120) for subsequent use at another user location.

12. Apparatus according to claim 11 and wherein the removable security element communicator is arranged to receive a disguising number from the removable security element (110) and to send the disguising number to the authorization provider, and the intermediary authorization request comprises the disguising number, and the authorization comprises a disguised authorization disguised with the disguising number.

13. Apparatus according to claim 11 or claim 12 and wherein the removable security element (110) comprises a smart card.

14. Apparatus according to any of claims 12 - 14 and wherein the item is utilizable as part of a pay-per-item system.

15. Apparatus according to claim 14 and wherein the pay-per-item system comprises a pay television system.

16. Apparatus according to claim 15 and wherein the item comprises a pay-per-view item.

17. Apparatus according to claim 15 and wherein the item comprises a subscription.

**Patentansprüche**

1. Verfahren zum Betreiben einer Schnittstellenvorrichtung zum anonymen Bestellen eines Artikels, wobei das Verfahren umfasst:

Empfangen eines lösbaren Sicherheitselements (110) in lösbarer betrieblicher Verbindung mit der Schnittstellenvorrichtung (120); und
Bereitstellen einer Autorisierung zum Nutzen des Artikels von der Schnittstellenvorrichtung (120) für das lösbare Sicherheitselement (110);

**dadurch gekennzeichnet, dass** die Schnittstellenvorrichtung dem lösbaren Sicherheitselement (110) die Autorisierung verschafft durch:

Empfangen einer Autorisierungsanfrage vom lösbaren Sicherheitselement (110) in der Schnittstellenvorrichtung (120);
durch die Schnittstellenvorrichtung (120) erfolgendes Senden einer Vermittlungsautorisierungsanfrage an eine Kopfstation (130);
durch die Schnittstellenvorrichtung (120) erfolgendes Empfangen der Autorisierung von der Kopfstation (130); und
durch die Schnittstellenvorrichtung (120) erfolgendes Senden der Autorisierung an das lösbare Sicherheitselement (110);

wobei das Verfahren ferner umfasst: Lösen des lösbaren Sicherheitselements (110) aus lösbarer betrieblicher Verbindung mit der Schnittstellenvorrichtung (120) für anschließende Verwendung an einem anderen Benutzerstandort.

2. Verfahren nach Anspruch 1 und worin das lösbare Sicherheitselement (110) eine Smartcard umfasst.

3. Verfahren nach einem der Ansprüche 1 oder 2 und außerdem umfassend:

vor dem Bestellen erfolgendes Lösen des lösbaren Sicherheitselements (110) aus lösbarer betrieblicher Verbindung mit einer Set-Top-Box (STB).

4. Verfahren nach einem der Ansprüche 1, 2 oder 3 und außerdem umfassend:

nach dem Bestellen erfolgendes Platzieren des lösbaren Sicherheitselements (110) in lösbarer betrieblicher Verbindung mit der STB.

5. Verfahren nach Anspruch 4 und außerdem umfassend:

Nutzen des Artikels mit der STB.

**6.** Verfahren nach einem der Ansprüche 1 bis 5 und worin die Autorisierungsanfrage eine Verschleierungsnummer umfasst, und die Autorisierung eine mit der Verschleierungsnummer verschleierte Autorisierung umfasst.

**7.** Verfahren nach Anspruch 6 und außerdem umfassend:

die Schnittstellenvorrichtung (120) sendet die Verschleierungsnummer an die Kopfstation (130); und die durch die Schnittstellenvorrichtung (120) von der Kopfstation (130) empfangene Autorisierung ist mit der Verschleierungsnummer verschleiert.

**8.** Verfahren nach einem der Ansprüche 1 bis 7 und worin das System zur Bezahlung pro Artikel ein Bezahlfernsehsystem umfasst.

**9.** Verfahren nach Anspruch 8 und worin der Artikel einen Artikel zum Bezahlen pro Betrachtung umfasst.

**10.** Verfahren nach Anspruch 8 und worin der Artikel ein Abonnement umfasst.

**11.** Schnittstellenvorrichtung (120), umfassend:

eine Kommunikationseinrichtung für lösbare Sicherheitselemente zum Kommunizieren mit einem lösbaren Sicherheitselement (110); und einen Autorisierungsbereitsteller zum Bereitstellen einer Autorisierung für einen Artikel für das lösbare Sicherheitselement (110) über die Kommunikationseinrichtung für lösbare Sicherheitselemente, wobei der Autorisierungsbereitsteller eine Kommunikationsvorrichtung zum Kommunizieren mit einer Kopfstation (130) umfasst;

**dadurch gekennzeichnet, dass** die Schnittstelle dafür eingerichtet ist, dem lösbaren Sicherheitselement die Autorisierung zu verschaffen durch:

Empfangen einer Autorisierungsanfrage von einem lösbaren Sicherheitselement; durch den Autorisierungsbereitsteller erfolgendes Senden einer Vermittlungsautorisierungsanfrage an die Kopfstation (130) über die Kommunikationsvorrichtung; Empfangen der Autorisierung von der Kopfstation (130) über die Kommunikationsvorrichtung; und Senden der Autorisierung an ein lösbares Sicherheitselement (110);

wodurch ein lösbares Sicherheitselement (110) aus betrieblicher Verbindung mit der Schnittstellenvorrichtung (120) für anschließende Verwendung an einem anderen Benutzerstandort lösbar ist.

**12.** Vorrichtung nach Anspruch 11 und worin die Kommunikationseinrichtung für lösbare Sicherheitselemente dafür eingerichtet ist, eine Verschleierungsnummer von dem lösbaren Sicherheitselement (110) zu empfangen und die Verschleierungsnummer an den Autorisierungsbereitsteller zu senden, und die Vermittlungsautorisierungsanfrage die Verschleierungsnummer umfasst, und die Autorisierung eine mit der Verschleierungsnummer verschleierte Autorisierung umfasst.

**13.** Vorrichtung nach Anspruch 11 oder Anspruch 12 und worin das lösbare Sicherheitselement (110) eine Smartcard umfasst.

**14.** Vorrichtung nach einem der Ansprüche 12 bis 14 und worin der Artikel als Teil eines Systems zur Bezahlung pro Artikel nutzbar ist.

**15.** Vorrichtung nach Anspruch 14 und worin das System zur Bezahlung pro Artikel ein Bezahlfernsehsystem umfasst.

**16.** Vorrichtung nach Anspruch 15 und worin der Artikel einen Artikel zum Bezahlen pro Betrachtung umfasst.

**17.** Vorrichtung nach Anspruch 15 und worin der Artikel ein Abonnement umfasst.

## Revendications

**1.** Procédé d'exploitation d'un dispositif d'interface pour commander un article anonyme, le procédé comprenant :

la réception d'un élément de sécurité amovible (110) en association fonctionnelle amovible avec le dispositif d'interface (120) ; et la fourniture, à l'élément de sécurité amovible (110), d'une autorisation d'utiliser l'article à partir du dispositif d'interface (120) ;

**caractérisé en ce que** le dispositif d'interface fournit l'élément de sécurité amovible (110) avec l'autorisation en :

recevant une demande d'autorisation en provenance de l'élément de sécurité amovible (110) au niveau du dispositif d'interface (120) ; le dispositif d'interface (120) envoyant une demande d'autorisation intermédiaire à une tête de station (130) ;

le dispositif d'interface (120) recevant l'autorisation en provenance de la tête de station (130) ; et

le dispositif d'interface (120) envoyant l'autorisation à l'élément de sécurité amovible (110) ;

le procédé comprenant en outre la suppression de l'élément de sécurité amovible (110) de l'association fonctionnelle amovible avec le dispositif d'interface (120) pour une utilisation subséquente au niveau d'un autre emplacement d'utilisateur.

2. Procédé selon la revendication 1, dans lequel l'élément de sécurité amovible (110) comprend une carte à puce.

3. Procédé selon l'une quelconque des revendications 1 ou 2, comprenant en outre :

avant la commande, la suppression de l'élément de sécurité amovible (110) de l'association fonctionnelle amovible avec le boîtier décodeur (STB).

4. Procédé selon la revendication 1, 2 ou 3, comprenant en outre :

après la commande, le placement de l'élément de sécurité amovible (110) en association fonctionnelle amovible avec le boîtier STB.

5. Procédé selon la revendication 4, comprenant en outre :

l'utilisation de l'article avec le boîtier STB.

6. Procédé selon l'une quelconque des revendications 1 à 5, dans lequel la demande d'autorisation comprend un numéro de masquage, et l'autorisation comprend une autorisation masquée avec le numéro de masquage.

7. Procédé selon la revendication 6, dans lequel en outre :

le dispositif d'interface (120) envoie le numéro de masquage à la tête de station (130) ; et l'autorisation reçue par le dispositif d'interface (120) à partir de la tête de station (130) est masquée avec le numéro de masquage.

8. Procédé selon l'une quelconque des revendications 1 à 7, dans lequel le système de paiement par article comprend un système de télévision à péage.

9. Procédé selon la revendication 8, dans lequel l'article comprend un article de paiement à la carte.

10. Procédé selon la revendication 8, dans lequel l'article comprend un abonnement.

11. Dispositif d'interface (120) comprenant :

un module de communication avec un élément de sécurité amovible pour communiquer avec un élément de sécurité amovible (110) ; et

un fournisseur d'autorisation pour fournir une autorisation connexe à un article à l'élément de sécurité amovible (110) par l'intermédiaire du module de communication avec un élément de sécurité amovible, le fournisseur d'autorisation comprenant un dispositif de communication destiné à communiquer avec une tête de station (130) ;

**caractérisé en ce que** l'interface est agencée de manière à fournir l'autorisation à l'élément de sécurité amovible en :

recevant une demande d'autorisation en provenance d'un élément de sécurité amovible ;

le fournisseur d'autorisation envoyant une demande d'autorisation intermédiaire à la tête de station (130) par l'intermédiaire du dispositif de communication ;

recevant l'autorisation en provenance de la tête de station (130) par l'intermédiaire du dispositif de communication ; et

envoyant l'autorisation à un élément de sécurité amovible (110) ;

moyennant quoi un élément de sécurité amovible (110) peut être supprimé de l'association fonctionnelle avec le dispositif d'interface (120) en vue d'une utilisation ultérieure au niveau d'un autre emplacement d'utilisateur.

12. Dispositif selon la revendication 11, dans lequel le module de communication avec un élément de sécurité amovible est agencé de manière à recevoir un numéro de masquage en provenance de l'élément de sécurité amovible (110) et à envoyer le numéro de masquage au fournisseur d'autorisation ; et la demande d'autorisation intermédiaire comporte le numéro de masquage ; et l'autorisation comprend une autorisation masquée laquelle est masquée au moyen du numéro de masquage.

13. Dispositif selon la revendication 11 ou 12, dans lequel l'élément de sécurité amovible (110) comprend une carte à puce.

14. Dispositif selon l'une quelconque des revendications 12 à 14, dans lequel l'article est utilisable dans le cadre d'un système de paiement par article.

15. Dispositif selon la revendication 14, dans lequel le système de paiement par article comprend un système de télévision à péage.

**16.** Dispositif selon la revendication 15, dans lequel l'article comprend un article de paiement à la carte.

**17.** Dispositif selon la revendication 15, dans lequel l'article comprend un abonnement.

FIG. 1

EP 1 405 517 B1

# FIG. 2

TO HEADEND

COMMUNICATION
APPARATUS

PROCESSOR

SMART CARD READER

# FIG. 3

REMOVE SMART CARD
FROM HOME STB AND
BRING TO KIOSK — 200

GENERATE RANDOM
NUMBER INSIDE SMART CARD — 210

SEND ITEM CHOICE, PAYMENT
AUTHORIZATION, AND
RANDOM NUMBER TO KIOSK — 220

KIOSK SENDS AUTHORIZATION
REQUEST AND RANDOM NUMBER
TO HEADEND — 230

KIOSK RECEIVES DISGUISED
AUTHORIZATION FROM HEADEND — 240

KIOSK SENDS DISGUISED
AUTHORIZATION TO SMART CARD — 250

SMART CARD REVERSES
DISGUISING TO OBTAIN
AUTHORIZATION — 260

RETURN SMART CARD TO HOME STB,
THEREBY ALLOWING USE OF ITEM — 270

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5282249 A, Cohen
- US 5481609 A, Cohen
- US 4325078 A, Seaton
- US 6169975 B, White
- US 5915226 A, Martineau
- US 5913203 A, Wong
- US 4987593 A
- US 4914698 A, Chaum
- US 5003348 A, Howitt
- WO 9966714 A, Peterka
- US 5731576 A, Valadier
- US 5590193 A, Le Roux
- US 5264689 A, Maes
- US 5768385 A, Simon
- US 4484217 A, Block
- US 6126069 A, Stiefel
- US 6009465 A, Decker
- US 3890461 A, Vogelman
- US 5070400 A, Lieberman
- US 4682224 A, Ragan
- US 5666412 A
- US 5774546 A
- US 5878134 A
- WO 0057636 A

### Non-patent literature cited in the description

- **D. CHAUM.** *Prepaid Smart Card Techniques - A Brief Introduction and Comparison*
- **D. CHAUM.** *Security without Identification -Card Computers to make Big Brother Obsolete*
- **D. CHAUM.** *On Electronic Commerce - How Much do You Trust Big Brother?*
- **D. HUSEMANN.** The Smart Card: Don't Leave Home Without It. *IEEE Concurrency,* April 1999, 24-27
- **S. DOKKO ; J. JEON ; Y. KIM.** An Implementation of Prepaid Service in CDMA PCS System. *Proceedings of the IEEE International Conference on Networks,* 1998, 5
- **J. DHEM ; D. VEITHEN ; J. QUISQUATER.** SCALPS: Smart Card for Limited Payment Systems. *IEEEMicro,* June 1996, 42-50
- **M. MILENKOVIC.** Delivering Interactive Services via a Digital TV Infrastructure. *IEEE Multimedia,* October 1998, 34-43